Europäisches Patentamt

European Patent Office

Office européen des brevets

(11) Veröffentlichungsnummer: **0 627 695 A2**

(12) **EUROPÄISCHE PATENTANMELDUNG**

(21) Anmeldenummer: **94107336.3**

(22) Anmeldetag: **11.05.94**

(51) Int. Cl.⁵: **G06F 15/70**

(30) Priorität: **29.05.93 DE 4318050**

(43) Veröffentlichungstag der Anmeldung:
**07.12.94 Patentblatt 94/49**

(84) Benannte Vertragsstaaten:
**AT BE CH DE ES FR IT LI NL**

(71) Anmelder: **VISIT GmbH, PERSONAL DATACARD SYSTEMS**
**Bötzinger Strasse 72**
**D-79111 Freiburg (DE)**

(72) Erfinder: **Wittmer,Thomas**
**Predigerstrasse 3**
**D-79098 Freiburg (DE)**
Erfinder: **Zahn,Walter**
**Gartenstrasse 2**
**D-79199 Kirchzarten (DE)**
Erfinder: **Jesch,Claus-Peter**
**Vulkanstrasse 17a**
**D-79361 Sasbach (DE)**

(74) Vertreter: **Goy, Wolfgang, Dipl.-Phys.**
**Zähringer Strasse 373**
**D-79108 Freiburg (DE)**

(54) **Verfahren zum Erkennen von zu Clustern gruppierten Strukturveränderungen in der medizinischen Diagnostik unter Verwendung eines entsprechenden Bildes, insbesondere zum Erkennen von punktförmigen Mikrokalkablagerungen in der Mammographie.**

㊵ Die Erfindung betrifft ein Verfahren zum Erkennen von zu Clustern gruppierten Strukturveränderungen in der medizinischen Diagnostik unter Verwendung eines entsprechenden Bildes. Das besondere Anwendungsgebiet der Erfindung ist dabei das Erkennen von punktförmigen Mikrokalkablagerungen in der Mammographie. Das Verfahren verwendet dabei als Bild ein in digitaler Form vorliegendes Bild sowie ein elektronisches Bildverarbeitungsverfahren. Dabei werden zunächst die einzelnen Bildelemente hinsichtlich ihrer Verdächtigkeit als Strukturveränderung überprüft, anschließend werden die als Strukturveränderungen verdächtigen Bildelemente zu Clustern zusammengeschlossen und schließlich werden die so gebildeten Cluster hinsichtlich clusterspezifischer Kriterien überprüft.

EP 0 627 695 A2

Die Erfindung betrifft ein Verfahren zum Erkennen von zu Clustern gruppierten Strukturveränderungen in der medizinischen Diagnostik unter Verwendung eines entsprechenden Bildes, insbesondere zum Erkennen von punktförmigen Mikrokalkablagerungen in der Mammographie.

Das spezielle Anwendungsgebiet der Erfindung ist die Erkennung von Brustkrebs in der Mammographie. Brustkrebs ist heutzutage eine der hauptsächlichen Todesursachen bei Frauen. Früherkennung und Behandlung verbessert jedoch wesentlich die Überlebenschancen. Die Mammographie mit Röntgenstrahlen ist dabei die einzige klinisch anerkannte diagnostische Methode zur Früherkennung von Brustkrebs. Zwischen 30 und 50% der Brustkarzinome, die radiographisch erkannt werden, weisen Mikroverkalkungen auf und zwischen 60 und 80% der Brustkarzinome weisen unter mikroskopischer Untersuchung Mikroverkalkungen auf. Bei der Erkennung von Brustkrebs kann somit ausgenützt werden, daß sich im jeweiligen Tumor Mikroverkalkungen bilden, also kleine punktförmige Kalkablagerungen, die auf dem herkömmlichen Röntgenfilm als helle Punkte erscheinen.

Das erfindungsgemäße diagnostische Verfahren ist nicht nur in der Mammographie mit den dort auftretenden und zu Clustern gruppierten, punktförmigen Mikrokalkablagerungen anwendbar, sondern immer dort, wo Strukturveränderungen auftreten, die auf dem entsprechenden Bild, beispielsweise auf einem Röntgenfilm optisch erkennbar sind. Die Strukturveränderungen sind dabei insbesondere punktförmig, wie dies auch bei den Mikrokalkablagerungen bei Brustkrebs der Fall ist. Somit kann die vorliegende Erfindung auch für andere Strukturerkennungen in der medizinischen Diagnostik nutzbar gemacht werden, beispielsweise bei der Erkennung von krankhaften nodulären Strukturen bei Thorax-Aufnahmen. Die Erfindung soll der Einfachheit halber anhand der Mikrokalkerkennung in der Mammographie erläutert werden.

Für die Erkennung von Mikroverkalkung ist einer hohe örtliche Auflösung notwendig, die in der Röntgenmammographie durch die Verwendung von speziellen Film-Folien-Kombinationen optimiert wird. Bislang werden dabei die Untersuchungen durch optische Auswertung mit dem Auge der Röntgenfilme durchgeführt. Dies ist einerseits sehr zeitaufwendig und andererseits mit einer großen Fehlerquote behaftet, da oft die punktförmigen Mikrokalkablagerungen nicht erkannt werden.

Davon ausgehend liegt der Erfindung die **Aufgabe** zugrunde, eine automatische Erkennung von zu Clustern gruppierte Strukturveränderungen in der medizinischen Diagnostik unter Verwendung eines entsprechenden Bildes, insbesondere zum Erkennen von punktförmigen Mikrokalkablagerungen in der Mammographie zu schaffen.

Als technische **Lösung** wird mit der Erfindung vorgeschlagen, daß als Bild ein indigitaler Form vorliegendes Bild sowie ein elektronisches Bildverarbeitungsverfahren verwendet wird, bei dem zunächst die einzelnen Bildelemente hinsichtlich ihrer Verdächtigkeit als Strukturveränderung überprüft werden, bei dem anschließend die als Strukturveränderungen verdächtigen Bildelemente zu Clustern zusammengeschlossen werden und bei dem schließlich die so gebildeten Cluster hinsichtlich clusterspezifischer Kriterien überprüft werden.

Dadurch ist ein auf EDV-Basis unter Verwendung von entsprechenden Computersystemen arbeitendes Verfahren zur automatischen Erkennung von zu Clustern gruppierten Strukturveränderungen in der medizinischen Diagnostik unter Verwendung von entsprechenden digitalen Bildern, insbesondere zum Erkennen von punktförmigen Mikrokalkablagerungen in der Mammographie geschaffen. Unter dem digitalen Bild ist dabei ganz allgemein ein Bild zu verstehen, das durch ein entsprechendes digitales bildgebendes Verfahren erzeugt worden ist. Die erfindungsgemäße automatische Erkennung von Strukturveränderungen in der medizinischen Diagnostik soll dabei im gegenwärtigen Stadium insbesondere im Hinblick auf die Mammographie die konventionelle Befundung unterstützen und ergänzen. Bei der Mammographie macht man sich den Umstand zunutze, daß sich die Mikroverkalkungen bei Abbildungen auf Film-Folien-Kombinationen durch bestimmte topologische Strukturen hervorheben. Diese Strukturen entstehen zum einen durch die einzelnen punktförmigen Mikroverkalkungen und zum anderen durch die Gruppierung der Mikroverkalkungen zu Clustern. Das erfindungsgemäße Verfahren zum Erkennen der Mikroverkalkungen basiert dabei auf drei verschiedenen Arten von Operationen, nämlich zunächst den Bildelementoperationen, bei denen einzelne Bildelemente mit verschiedenen Tests (Intensitätstest, Umgebungstests) in Bezug auf Verdächtigkeit als Mikroverkalkung überprüft werden, weiterhin die Clusterbildung, bei der als Mikroverkalkung verdächtige Bildelemente zu Clustern zusammengeschlossen werden, und schließlich die Clusteroperationen, die die entstandenen Cluster nach weiteren Kriterien selektieren. Die durchzuführenden Tests werden dabei mit Parametersätzen implementiert, die noch vom Arzt auf die jeweilige Anlage angepaßt werden können. Beispielsweise ist der Helligkeitsunterschied einer Mikroverkalkung zu seiner Umgebung unter anderem abhängig von der bei der Röntgenaufnahme verwendeten kV und mAs-Zahl. Sofern die Mikrokalkerkennung zu einem positiven Ergebnis führt, wenn also das System zu Clustern gruppierte Mikroverkalkungen erkennt, wird eine entsprechende Meldung abgegeben und die Mikroverkalkungen werden kenntlich gemacht.

In einer Weiterbildung des erfindungsgemäßen Verfahrens wird vorgeschlagen, daß das in digitaler Form vorliegende Bild durch radiale Radiographie (digitale Bildverstärkerradiographie, digitale Lumineszenzradiographie, digitale Filmradiographie) oder durch rekonstruktive Verfahren (Computertomographie, Kernspintomographie, Positron Emissions Tomographie) gewonnen wird. Besonders hervorzuheben bei diesen digitalen bildgebenden Verfahren ist die sogenannte digitale Filmradiographie, bei der von einem herkömmlichen analogen Röntgenfilm ausgegangen wird, der dann durch sogenanntes Scannen in ein digitales Bild übergeführt wird.

In einer Weiterbildung hiervon wird vorgeschlagen, daß ein analoger Röntgenfilm optisch abgetastet und die so gewonnenen Intensitäts-Analogwerte in Digitalwerte transformiert werden, wobei ein analoger Röntgenfilm verwendet wird, welcher durch Strahlendosisreduktion unterbelichtet ist und wobei dabei die Unterbelichtung vorzugsweise ungefähr 30 bis 60% beträgt. Ein nach dieser technischen Lehre ausgebildetes Verfahren zur Bereitstellung von digitalen Röntgenbildern in der Röntgendiagnostik hat in völlig überraschender Weise den Vorteil, daß ausgehend von den herkömmlichen analogen Röntgenfilmen trotz einer Strahlendosisreduktion und somit einer verminderten Strahlenbelastung für den Patienten in paradoxer Weise ein besseres digitales Röntgenbild auf dem Bildschirm wiedergegeben wird bzw. werden kann, als dies mit nach dem bisherigen Verständnis optimal belichteten Röntgenfilmen möglich war. Für die Digitalisierung des analogen Röntgenfilms wird dabei von einem Röntgenfilm ausgegangen, welcher bewußt unterbelichtet, also zu hell ist. Beurteilungskriterium, daß die analoge Röntgenbildvorlage unterbelichtet ist, ist eine Abweichung zu einem helleren Röntgenfilm hin, und zwar ausgehend von einem optimal belichteten analogen Röntgenfilm für eine konventionelle Diagnose unter Zuhilfenahme eines Leuchtkastens zur Erzielung einer optimalen diagnostischen Leistungsfähigkeit. Eine Unterbelichtung ist somit dann gegeben, wenn die von den Richtlinien angegebene Strahlendosis bzw. Strahlenexpositionszeit zur Optimierung eines konventionellen Röntgenfilms unterschritten wird. Es hat sich somit gezeigt, daß trotz einer intensitätsschwächeren und damit helleren Röntgenfilmvorlage durch die Digitalisierung auf dem Bildschirm ein Röntgenbild erhalten werden kann, das in seiner Qualität besser ist, als wenn der Röntgenfilm "optimal" belichtet worden wäre. Durch eine entsprechende Anpassung der Gradationsstufen an die Helligkeitskontraste im Röntgenfilm kann diese Optimierung des auf dem Bildschirm wiedergegebenen, digitalisierten Röntgenbildes erzielt werden. Vorzugsweise beträgt die Unterbelichtung ungefähr 30 bis 60%.

Die Größe der Unterbelichtung hängt von den aufzunehmenden Bereichen ab. Größenordnungsmäßig kann aber gesagt werden, daß man mit ungefähr der Hälfte der bisher sonst üblichen Strahlendosis auskommt, um damit noch bessere Röntgenbilder zu erhalten. Entsprechend ist die Strahlenbelastung für den Patienten auf die Hälfte gesenkt, so daß beispielsweise die Mammographieuntersuchungen für die Patientinnen schonender sind. Selbstverständlich ist es in bestimmten Fällen denkbar, daß die Unterbelichtung außerhalb des angegebenen Bereiches liegt.

Im nachfolgenden werden verschiedene Bildelementoperationen beschrieben, um damit gemäß der ersten Verfahrensstufe die Verdächtigkeit der einzelnen Bildelemente als Strukturveränderung zu überprüfen.

So wird gemäß einer ersten Bildelementoperation vorgeschlagen, daß zum Überprüfen der einzelnen Bildelemente hinsichtlich ihrer Verdächtigkeit als Strukturveränderung eine Überprüfung dahingehend durchgeführt wird, ob die Bildelemente hinsichtlich der Intensität ihres jeweiligen Grauwertes innerhalb eines vorgegebenen Bereiches liegen. Dies stellt einen Intensitätstest dar.

Eine zweite Bildelementoperation schlägt vor, daß zum Überprüfen der einzelnen Bildelemente hinsichtlich ihrer Verdächtigkeit als Strukturveränderung eine Überprüfung dahingehend durchgeführt wird, ob die Bildelemente hinsichtlich des Verhältnisses der Intensität ihres jeweiligen Grauwertes zu der über eine lokale Umgebung gemittelten Intensität des Grauwertes innerhalb eines vorgegebenen Bereichs liegt. Diese Verhältnisbildung im Sinne einer Intensitätsquotientenbildung stellt einen Umgebungstest dar.

Schließlich wird gemäß einer dritten Bildelementoperationvorgeschlagen, daß zum Überprüfen der einzelnen Bildelemente hinsichtlich ihrer Verdächtigkeit als Strukturveränderung eine Überprüfung dahingehend durchgeführt wird, ob die Bildelemente hinsichtlich des Unterschiedes der Intensität ihres jeweiligen Grauwertes zu der über eine lokale Umgebung gemittelten Intensität des Grauwertes innerhalb eines vorgegebenen Bereichs liegt. Bei diesem zweiten Umgebungstest handelt es sich im mathematischen Sinne um eine Differenzbildung.

Die zuvor beschriebenen drei Bildelementoperationen stellen für sich selbständige Kriterien dahingehend dar, ob es sich tatsächlich um eine zu diagnostizierende Strukturveränderung handelt. Jede dieser drei Bildelementoperationen gibt dabei eine Untergrenze sowie eine Obergrenze vor. Bevorzugt wird die Kombination der drei Bildelementoperationen angewendet, so daß insgesamt sechs Schranken für die entsprechenden Meßwerte vorgegeben sind. Liegen die Meßwerte innerhalb der entsprechenden Schranken, so wird die entsprechende Strukturveränderung als verdächtig identifiziert. In einem nachfolgenden Schritt erfolgt dann die Clusterbildung, bei der die als Mikroverkalkung verdächtigen Bildelemente zu Clustern zusammengeschlossen werden, damit anschließend die Clusteroperationen die so gebildeten Cluster nach weiteren clusterspezifischen Kriterien untersuchen.

So wird in einer Weiterbildung vorgeschlagen, daß zur Clusterekennung in einem vorgegebenen Bereich die Standardabweichung der Grauwertintensitäten der in diesem Bereich liegenden, verdächtigen Bildelemente bestimmt wird. Man macht sich dabei den Umstand zunutze, daß die zu Clustern gruppierten Mikroverkalkungen hinsichtlich ihrer Grauwertintensitäten eine sogenannte Gaußverteilung aufweisen. Wird somit bei dieser Clusteroperation eine typische Gaußverteilung der verdächtigen Bildelemente ermittelt, so ist das ein Indiz dafür, daß ein aus Mikroverkalkungen gebildeter Cluster vorliegt.

Eine weitere Clusteroperation schlägt vor, daß zur Clustererkennung die Anzahl der Strukturveränderungen pro Volumeneinheit bestimmt wird. Hinsichtlich dieses Kriteriums macht man sich den Umstand zunutze, daß beispielsweise bei der Mammographie in einem bestimmten Volumenbereich eine Mindestanzahl von entsprechenden Mikroverkalkungen anzutreffen ist, beispielsweise mehr als 3 Stück pro cm$^3$.

Die zuvor beschriebenen beiden Clusteroperationen werden vorzugsweise in Kombination angewendet und darüber hinaus weiterhin in Kombination mit den zuvor beschriebenen drei Bildelementoperationen, so daß man eine Vielzahl von Kriterien hat, ob die vorliegenden Strukturveränderungen, insbesondere Mikroverkalkungen als solche verdächtig sind.

Einzelne Punkte, die durch Emulsionsdefekte des Röntgenfilms entstehen, sind in ihrer Erscheinung einzelnen Mikroverkalkungen sehr ähnlich. Mit Hilfe der Clustererkennung können solche Emulsionsdefekte von den für die Detektion einer für einen Brustkrebs relevanten Struktur unterschieden werden. Hierzu reicht es aus, die Standardabweichung in einem lokalen Umfeld zu betrachten, welches den kritischen Punkt nicht mehr enthält (Umgebungstest).

Zur Festlegung einer Randkontur wird die Möglichkeit von Konturen, die sich durch Isohöhenlinien der Standardabweichung ergeben, untersucht. Ebenso können längliche Strukturen, die keine Cluster von Mikroverkalkungen darstellen, mit Hilfe dieser Technik von den Mikroverkalkungen differenziert werden.

Zur Durchführung des erfindungsgemäßen Erkennungsverfahrens werden vorab an dem zu untersuchenden digitalen Bild vorzugsweise Transformationen ausgeführt, die mit den Bildelementen durchgeführt werden, wobei die Transformationen in Zuordnungen über Gradationskurven sowie in Filteroperationen unterschieden werden.

So wird in einer Weiterbildung vorgeschlagen, daß zur Kontrastoptimierung des Bildes zunächst in einer Vorstufe den Bildelementen des Bildes eine neue Gradationsabstufung zugeordnet wird. Gradationskurven sind eine effektive und schnelle Methode zur Kontrastoptimierung. Hierbei wird dem Grauwert eines einzelnen Bildelements mit Hilfe einer Tabelle (LUT: Look Up Table) bzw. einer mathematischen Funktion ein neuer Grauwert zugeordnet. Diese Zuordnung kann graphisch als Gradationskurve dargestellt werden. Insbesondere kann man mit Hilfe selektiver Grauwertspreizung den Kontrast optimieren. Bei einer richtig belichteten konventionellen Röntgenaufnahme liegt der Teil der wesentlichen Information im näherungsweise linearen Teil der Schwärzungskurve. Bei Überlagerung von Organteilen bei der Projektion liegt typischerweise die kritische Information in einem wesentlich kleineren Gebiet auf dem linearen Teil. Mit der geeigneten Zuordnung über eine S-förmige Gradationskurve kann dieser Teil jedoch über den Grauwertbereich entsprechend gespreizt werden, so daß sich für die Beurteilung optimierte Bedingungen ergeben. Diese Methode zur Kontrastoptimierung des Bildes mit einer geeigneten Gradationsabstufung wird insbesondere dann angewendet, wenn von einem herkömmlichen analogen Röntgenfilm ausgegangen wird, der durch Scannen in ein digitales Bild übergeführt wird (digitale Filmradiographie).

Eine weitere Weiterbildung schlägt vor, daß ausgehend von einem analogen Röntgenfilm während des Prozesses der Digitalisierung das Bild in Abhängigkeit von dem Bildmotiv softwaremäßig optimiert wird. Die Optimierung wird dabei vorzugsweise mittels eines Prescans und anschließender Bearbeitung der eingescannten Daten durchgeführt. Die Optimierung des Röntgenbildes beim Einscannen hinsichtlich verschiedener Gradationskurven sowie Histogrammausgleich hängt von der jeweiligen medizinischen Fragestellung ab. Grundlage bilden dabei Erfahrungswerte, wobei während des Scannvorganges entsprechend dieser Erfahrungswerte zum Erkennen der Mikroverkalkungen geeignete Gradationskurven verwendet werden. Somit wird bereits beim Scannprozeß ein speziell für die Mammadiagnostik angepaßte Gradationskurve verwendet. Im Hinblick auf die zuvor bereits erwähnte Reduktion der Strahlendosis ist insbesondere der Fall von Bedeutung, bei dem sich die Information durch Unterbelichtung auf dem unteren Teil der Schwärzungskurve (helle Aufnahmen) befindet und anschließend durch entsprechende Gradationskurven die Grauwerte der (zu hellen) Röntgenbilder in einen für das Auge gut wahrnehmbaren Bereich geordnet werden.

Eine weitere Weiterbildung des erfindungsgemäßen Verfahrens schlägt vor, daß zur Kontrastoptimierung des Bildes zunächst in einer Vorstufe ein Histogrammausgleich durchgeführt wird. Er ist insbesondere dann interessant, wenn man nicht von vornherein weiß, in welchem Grauwertbereich die meiste Information liegt bzw. wenn die Information sich auf wenige, gegebenenfalls getrennte Grauwertbereiche erstreckt. So hat man zum Beispiel bei Thorax-Aufnahmen sehr helle (Mediastinum) und sehr dunkle (Lungenparenchym) Stellen, die je nach Lungenerkrankung (z.B. Emphysen) stärker zum Ausdruck kommen. Ein Histogrammausgleich dehnt nun Bereiche von Grauwerte mit hoher Häufigkeit gegenüber Bereichen von Grauwerten mit niedriger Häufigkeit über die Grauwertskala aus.

Hinsichtlich der zuvor erwähnten Transformation "Filteroperation" wird in einer weiteren Weiterbildung des erfindungsgemäßen Erkennungsverfahrens vorgeschlagen, daß das Bild zunächst in einer Vorstufe mit einem Filter, insbesondere einem Hochpaß-Filter, einem Struktur-Filter oder einem Mittelwert-Filter bearbeitet wird. Diese Filterbearbeitungen mit entsprechenden Filteralgorithmen werden auf elektronischem Wege unter Verwendung der Transputertechnologie durchgeführt. Während bei Gradationskurven jedem Grauwert unabhängig von der Positionierung des Bildelementes einer neuer Wert zugeordnet wird, erlauben Filteralgorithmen positionsabhängige Zuordnungen. Dadurch können selektiv spezifische Ortsfrequenzen verstärkt werden und damit Details wie Kanten hervorgehoben werden. Hierzu wird vorzugsweise von den Daten des Originalbildes eine sogenannte unscharfe Maske berechnet. Bei der unscharfen Maske wird jeder Grauwert eines Bildelements durch den über einen bestimmten Bereich definierter Kernelgröße gemittelten Wert ersetzt. Die Kernelgröße legt fest, wieviele Bildelemente der Umgebung zur Mittelung miteinbezogen werden. Beispielsweise bei einer Pixelgröße von 0,2 mm und einer Kernellänge von 10 mm werden bei einer Mittelung über einen quadratischen Bereich 50 x 50 = 2500 Bildelemente zur Berechnung der unscharfen Maske verwendet. Die unscharfe Maske stellt dabei eine Tiefpaßfilterung dar. Um daraus einen Hochpaß zu gewinnen, wird die unscharfe Maske B vom Originalbild A subtrahiert. Diese Operation ergibt dann das Kantenbild. Dieses Kantenbild wird dann mit einem Faktor c (enhancement factor) gewichtet zum Originalbild addiert und ergibt das gefilterte Bild F:

$$F = A + c (A - B)$$

Der so gebildete Hochpaß-Filter ist abgesehen von der Form des gemittelten Bereichs wesentlich eine Funktion der Kernelgröße und des Verstärkungsfaktors. Je kleiner die Kernelgröße ist, desto kleiner sind die Details, die im gefilterten Bild betont werden. Als Faustregel gilt dabei: Ist die Kernelgröße kleiner als die betrachtete Struktur, so wird deren Randkontur hervorgehoben; ist sie größer als die betrachtete Struktur, so wird die Struktur selbst betont.

Zur Vermeidung von Artefakten erweist es sich als vorteilhaft, c nicht als Konstante sondern als Funktion der Grauwerte zu behandeln: c = c (g).

Zusätzlich (oder alternativ) können noch Filter der Form

$$F = \text{const.} + (c + 1{,}5)(A-B) \quad \text{Strukturfilter}$$

sowie

$$F = (A - (B - \text{const.})/2) + c (A - B) \quad \text{Mittelwertfilter}$$

verwendet werden.

Von Vorteil ist es, im Anschluß an den Scanprozeß beim Digitalisieren von herkömmlichen analogen Röntgenfilmen und vor den Bildelementoperationen noch einen speziellen Filteralgorithmus (Strukturfilter) basierend auf einer Tiefpaßfilterung mit unscharfer Maske und eine anschließende Kontrastoptimierung über Gradationskurven (jetzt Zuordnung alter Grauwert/neuer Grauwert) automatisch zusammenzufassen.

Schließlich wird in einer Weiterbildung vorgeschlagen, daß das Bild auf einem optischen Datenträger, insbesondere auf einer optischen Karte gespeichert wird. Der besondere Vorteil einer derartigen optischen Karte besteht darin, daß sie sehr große Datenmengen fassen kann, die durch die optischen Abtastverfahren sehr unempfindlich gegen äußere Einwirkungen sind. Die optische Karte hat weiterhin den Vorteil, daß sie aufgrund ihrer Scheckkartengröße sehr handlich ist.

Das zuvor beschriebene erfindungsgemäße Verfahren anhand der Früherkennung von Brustkrebs unterscheidet sich nicht nur durch speziell angepaßte Gradationskurven und Filteralgorithmen, sondern auch in der Durchführung von bestimmten Tests, deren Parameter noch vom Arzt adjustierbar sind.

**Patentansprüche**

1. Verfahren zum Erkennen von zu Clustern gruppierten Strukturveränderungen in der medizinischen Diagnostik unter Verwendung eines entsprechenden Bildes, insbesondere zum Erkennen von punktförmigen Mikrokalkablagerungen in der Mammographie,
   **dadurch gekennzeichnet,**

daß als Bild ein in digitaler Form vorliegendes Bild sowie ein elektronisches Bildverarbeitungsverfahren verwendet wird,

bei dem zunächst die einzelnen Bildelemente hinsichtlich ihrer Verdächtigkeit als Strukturveränderung überprüft werden,

bei dem anschließend die als Strukturveränderungen verdächtigen Bildelemente zu Clustern zusammengeschlossen werden und

bei dem schließlich die so gebildeten Cluster hinsichtlich clusterspezifischer Kriterien überprüft werden.

2. Verfahren nach Anspruch 1, dadurch gekennzeichnet, daß das in digitaler Form vorliegende Bild durch digitale Radiographie (digitale Bildverstärkerradiographie, digitale Lumineszenzradiographie, digitale Filmradiographie) oder durch rekonstruktive Verfahren (Computertomographie, Kernspintomogrophie, Positron Emissions Tomographie) gemessen wird.

3. Verfahren nach Anspruch 1 oder 2, dadurch gekennzeichnet, daß ein analoger Röntgenfilm optisch abgetastet und die so gewonnenen Intensitäts-Analogwerte in Digitalwerte transformiert werden, wobei ein analoger Röntgenfilm verwendet wird, welcher durch Strahlendosisreduktion unterbelichtet ist und wobei dabei die Unterbelichtung vorzugsweise ungefähr 30 bis 60% beträgt.

4. Verfahren nach einem der Ansprüche 1 bis 3, dadurch gekennzeichnet, daß zum Überprüfen der einzelnen Bildelemente hinsichtlich ihrer Verdächtigkeit als Strukturveränderung eine Überprüfung dahingehend durchgeführt wird, ob die Bildelemente hinsichtlich der Intensität ihres jeweiligen Grauwertes innerhalb eines vorgegebenen Bereichs liegen.

5. Verfahren nach einem der Ansprüche 1 bis 4, dadurch gekennzeichnet, daß zum Überprüfen der einzelnen Bildelemente hinsichtlich ihrer Verdächtigkeit als Strukturveränderung eine Überprüfung dahingehend durchgeführt wird, ob die Bildelemente hinsichtlich des Verhältnisses der Intensität ihres jeweiligen Grauwertes zu der über eine lokale Umgebung gemittelten Intensität des Grauwertes innerhalb eines vorgegebenen Bereichs liegt.

6. Verfahren nach einem der Ansprüche 1 bis 5, dadurch gekennzeichnet, daß zum Überprüfen der einzelnen Bildelemente hinsichtlich ihrer Verdächtigkeit als Strukturveränderung eine Überprüfung dahingehend durchgeführt wird, ob die Bildelemente hinsichtlich des Unterschieds der Intensität ihres jeweiligen Grauwerts zu der über eine lokale Umgebung gemittelten Intensität des Grauwerts innerhalb eines vorgegebenen Bereichs liegt.

7. Verfahren nach einem der Ansprüche 1 bis 6, dadurch gekennzeichnet, daß zur Clustererkennung in einem vorgegebenen Bereich die Standardabweichung der Grauwertintensität der in diesen Bereich liegenden, verdächtigen Bildelemente bestimmt wird.

8. Verfahren nach einem der Ansprüche 1 bis 7, dadurch gekennzeichnet, daß zur Clustererkennung die Anzahl der Strukturveränderungen pro Volumeneinheit bestimmt wird.

9. Verfahren nach einem der Ansprüche 1 bis 8, dadurch gekennzeichnet, daß zur Kontrastoptimierung des Bildes zunächst in einer Vorstufe den Bildelementen des Bildes eine neue Gradationsabstufung zugeordnet wird.

10. Verfahren nach einem der Ansprüche 1 bis 9, dadurch gekennzeichnet, daß ausgehend von einem analogen Röntgenfilm während des Prozesses der Digitalisierung das Bild in Abhängigkeit von dem Bildmotiv softwaremäßig optimiert wird.

11. Verfahren nach Anspruch 10, dadurch gekennzeichnet, daß die Optimierung mittels eines Prescans und anschließender Bearbeitung der eingescannten Daten durchgeführt wird.

12. Verfahren nach einem der Ansprüche 1 bis 11, dadurch gekennzeichnet, daß zur Kontrastoptimierung des Bildes zunächst in einer Vorstufe ein Histogrammausgleich durchgeführt wird.

13. Verfahren nach einem der Ansprüch 1 bis 12, dadurch gekennzeichnet, daß das Bild zunächst in einer Vorstufe mit einem Filter, insbesondere einem Hochpaß-Filter, einem Struktur-Filter oder einem Mittelwert-Filter bearbeitet wird.

14. Verfahren nach einem der Ansprüche 1 bis 13, dadurch gekennzeichnet, daß das Bild auf einem optischen Datenträger, insbesondere auf einer optischen Karte gespeichert wird.